# EUROPEAN PATENT APPLICATION

(11) **EP 1 675 391 A1**
(43) Date of publication of application: **28.06.2006**
(21) Application number: 05112946.8
(22) Date of filing: 23.12.2005
(51) Int. Cl.: H04N 5/445

(54) **Menu for a digital television**

(30) Priority: 27.12.2004 KR 2004112796
(71) Applicant: Samsung Electronics Co., Ltd., Suwon-si 442-742 Gyeonggi-Do (KR)
(72) Inventor: Lee, Sang-hee, Seodaemun-gu Seoul (KR); Kim, Joon-hwan, Seoul (KR); Park, Mi-ju, Seoul (KR); Pan, Young-hwan, Seoul (KR)
(74) Representative: Jackson, Jonathan Andrew

(57) **Abstract**

A digital TV providing a plurality of contents includes a user input unit; a displaying unit which displays an image thereon; and a controller, which controls the displaying unit to display a contents execution menu corresponding to one of the contents being executed, and including selection items to execute corresponding functions provided by the contents being executed, according to a first signal input from the user input unit, and executes the function corresponding to the selection item selected according to a second signal input from the user input unit.

According to the digital TV, and a control method thereof, a user is easily aware of functions used in each of the contents provided by the digital TV, and execution of the functions is facilitated.

## Description

### Description

The present invention relates to a digital television (TV) and a control method thereof, and more particularly, to a digital TV providing a plurality of contents and a control method thereof.

Generally, in addition to a function of displaying a picture based on a digital broadcasting signal, a digital TV often performs multiple additional functions in response to the digitalization or upgrading of external devices.

For example, a multimedia file saved in a storage device, such as a memory card, may be executed on the digital TV. For this example, the digital TV comprises an interface for the memory card.

With the digital TV, a remote control is provided to operate functions that may be performed to the various contents, thereby executing various functions.

The remote control comprises, for example, a plurality of buttons. Here, a single function may be allocated to each button. Alternatively, a single button may be used to perform two or more functions. Generally, text or a symbol is written on the button executing two or more functions to inform a user of the different functions.

However, as the digital TV provides various contents and the respective contents provide various functions, there is a limit on the allocation of these functions to corresponding buttons, as well as writing the text or the symbol on a button to inform the user of the function thereof.

Accordingly, if the aforementioned limitations are overcome, the user will be provided with a more convenient user interface.

It is an aspect of the present invention to provide a digital TV and a control method thereof, in which a user may be easily made aware of functions used in each of a plurality of contents provided by the digital TV, and which may facilitate execution of the functions.

According to an aspect of the present invention, there is provided a digital TV providing a plurality of contents, the digital TV comprising: a user input unit; a displaying unit which displays an image thereon; and a controller, which controls the displaying unit to display a contents execution menu that comprises at least one selection item to execute a function provided by an executed contents, according to a first signal input from the user input unit, and executes a particular function corresponding to a selection item selected from the contents execution menu, according to a second signal input from the user input unit.

According to an aspect of the present invention, the controller comprises a menu generating unit which saves the contents execution menu corresponding to each of the plurality of contents and displays at least one of the saved contents execution menus on the displaying unit; and a microcomputer which controls the menu generating unit according to the first signal received from the user input unit.

According to another aspect of the present invention, the plurality of contents comprise, for example, displaying a picture based on a TV broadcasting signal; and executing a multimedia file provided from at least one external device connected to the digital TV.

According to an aspect of the present invention, there is provided a control method of a digital TV providing a plurality of contents and comprising a user input unit, the control method comprising: executing one of the plurality of contents provided by the digital TV; displaying a contents execution menu comprising at least one selection item to execute a function provided by the executed contents, according to a first signal input from the user input unit; inputting a second signal from the user input unit to select a selection item from the contents execution menu; and executing a function corresponding to the selection item selected from the contents execution menu.

Preferably, the plurality of contents comprises displaying a picture based on a TV broadcasting signal received by the digital TV.

Preferably, the plurality of contents comprises performing an electronic program guide.

Preferably, the plurality of contents comprises executing a multimedia file provided by an external device connected to the digital TV.

In this case, the external device may be a home appliance or a memory card.

Additionally, the external device may be a network connection device.

In this case, the network connection device may connect the digital TV to the Internet.

Preferably, the user input unit is a remote control device or a keypad disposed on the digital TV, the keypad comprising at least one key.

Embodiments of the present invention will now be described, by way of example only and with reference to the accompanying drawings, in which:
Figure 1 is a block diagram of a digital TV, according to an exemplary embodiment of the present invention;
Figure 2 shows a plurality of contents provided by a digital TV, when a memory card is connected to the digital TV;
Figure 3 shows a state in which a photo-viewing contents is executed from among the plurality of contents shown in Figure 2;
Figure 4 shows a contents execution menu comprising selection items to execute functions provided by a photo-viewing contents; and
Figure 5 is a control method of a digital TV, according to an exemplary embodiment of the present invention.

In the accompanying drawings, like reference numerals refer to like elements throughout.

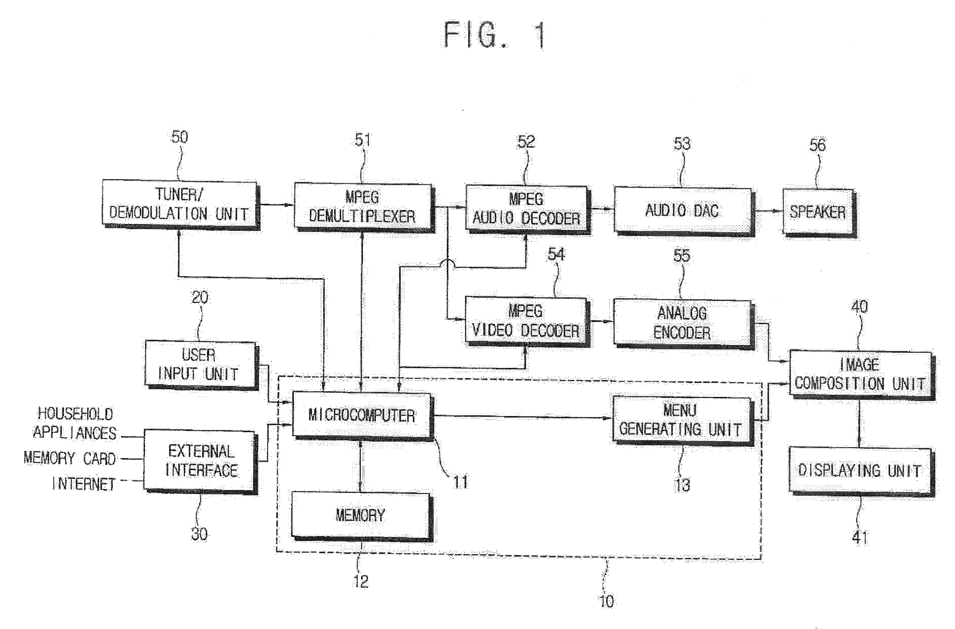

As shown in Figure 1, a digital TV according to an exemplary embodiment of the present invention comprises a user input unit 20, e.g., a remote control unit or a keypad disposed on the digital TV, which receives an input from a user, a displaying unit 41 which displays an image thereon, and a controller 10, which controls, when one of a plurality of contents that the digital TV provides is executed, the displaying unit 41 to display a contents execution menu. The contents execution menu comprises at least one selection item to execute a function provided by the executed contents, according to a first signal input from the user input unit 20, and executes the function corresponding to a selection item selected from the contents execution menu, according to a second signal input from the user input unit 20.

Further, the digital TV comprises a tuner/demodulation unit 50 which tunes/demodulates a broadcasting channel selected by a user and a Moving Picture Experts Group (MPEG) demultiplexer 51 which demultiplexes a signal output from the tuner/demodulation unit 50 according to an MPEG system protocol. The MPEG demultiplexer 51 may alternatively confirm an ID of a packet and divide the signal output from the tuner/demodulation unit 50 into an image signal, an audio signal, a service information (SI) signal, etc.

The digital TV further comprises an MPEG video decoder 54 which decodes the image signal of the signals output from the MPEG demultiplexer 51 according to an MPEG algorithm, and an analogue encoder 55 which encodes the image signal decoded by the MPEG video decoder 54 into an analogue image signal.

The digital TV further comprises an MPEG audio decoder 52 which decodes the audio signal of the signals output from the MPEG demultiplexer 51 according to an MPEG algorithm, and an audio digital/analogue converter (DAC) 53 which converts the decoded audio signal from a digital audio signal into an analogue audio signal.

An external interface 30 of the digital TV may be configured to connect a variety of devices, e.g., a home appliance and/or a memory card, to the digital TV, as the digital TV is developed to support these devices. Further, the external interface 30 may be a network connection device which is configured to connect the digital TV to a variety of networks including the Internet. The external interface 30 may be modularized for each device to be connected to the digital TV. A modularized part of the external interface 30 may comprise a function needed for driving the corresponding device.

An image composition unit 40 outputs signals received from a menu generating unit 13 and the analogue encoder 55 to the displaying unit 41.

The controller 10 comprises a microcomputer 11, which applies a control signal to the respective components of the digital TV, a memory 12 which includes a program needed to provide various contents and is used for temporarily storing data, and the menu generating unit 13 which generates a contents execution menu that provides a selection item to execute a function which the contents provides, according to the control signal of the microcomputer 11.

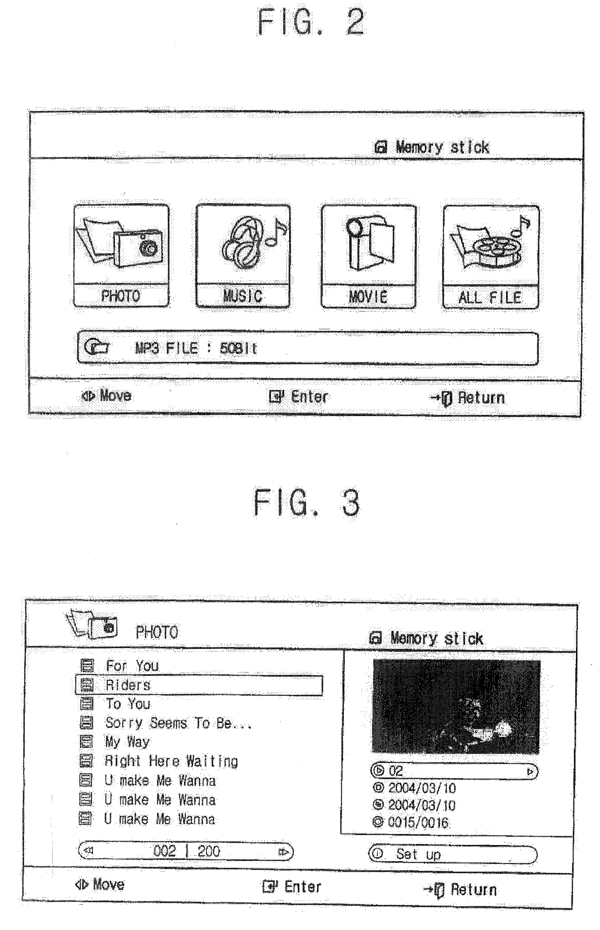

When receiving a predetermined key signal from the user input unit 20 (e.g., in response to a user manipulating a predetermined key on a remote control device or a keypad of the digital TV), the microcomputer 11 controls the menu generating unit 13 so as to display the contents execution menu, which is used to select and execute one of a plurality of contents, on the displaying unit 41, as shown in Figure 2.

Figure 2 illustrates a plurality of contents that the digital TV provides when a memory card is connected to the digital TV.

The contents according to an exemplary embodiment of the present invention, as shown in Figure 2, may comprise photo-viewing, music-listening, moving-picture-viewing, and all-file-reading with respect to files saved in the memory card.

If a user operates the user input unit 20 and selects the photo-viewing contents from among the contents shown in Figure 2, the microcomputer 11 controls the menu generating unit 13 to execute the corresponding contents and at the same time cause an image or photo file from among files saved in the memory card to be displayed, as shown in Figure 3.

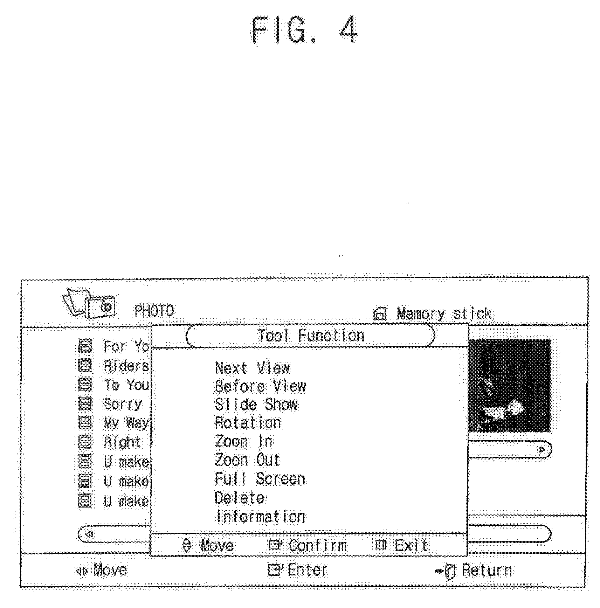

If the predetermined first signal is input from the user input unit 20, such as a remote control or the like, while one of the plurality of contents provided by the digital TV is executed as described above, the microcomputer 11 controls the menu generating unit 13 to display on the displaying unit 41 the contents execution menu. The contents execution menu comprises at least one selection item to execute a function which the executed contents provides, as shown in Figure 4. In Figure 4, the contents execution menu is labelled as a Tool Function.

According to the second signal input from the user input unit 20 to select one selection item from among the selection items of the contents execution menu, while the contents execution menu is displayed, the microcomputer 11 executes a function corresponding to the selected selection item.

The above exemplary embodiment of the present invention describes the contents provided by the digital TV when the memory card is connected to the digital TV. Furthermore, the controller of the digital TV according to other exemplary embodiments of the present invention structures, displays, and executes the contents execution menu so as to correspond to the contents that the digital TV provides in various cases, for example, if a device other than the memory card is connected to the digital TV, if Electronic Program Guide (EPG) is performed, or if the digital TV displays a picture based on a digital TV broadcasting signal.

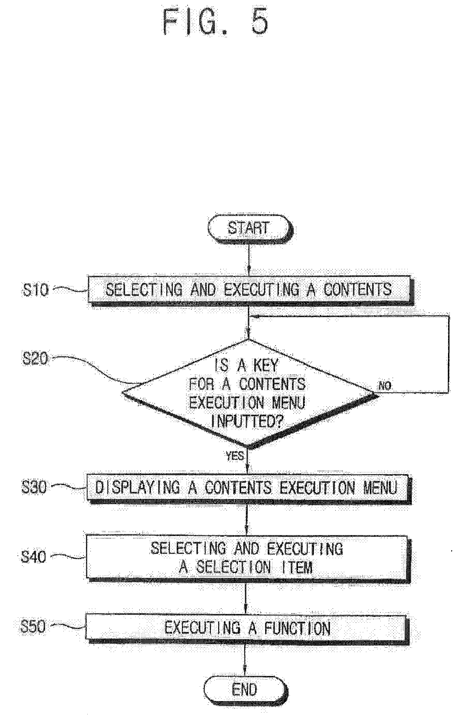

Hereinbelow, a control method of the digital TV according to an exemplary embodiment of the present invention will be described with reference to Figure 5.

When one content, from among a plurality of contents provided by the digital TV, is selected and executed at operation S10, the controller 10 determines a predetermined key operation of the user input unit 20 at operation S20.

If the key operation corresponds to displaying the content execution menu, the controller 10 controls the displaying unit 41 to display the contents execution menu. The contents execution menu comprises at least one selection item to execute a function which the executed contents provides, at operation S30.

If a selection item of the contents execution menu is selected and executed according to another key operation of the user input unit 20, at operation S40, the controller 10 executes the function corresponding to the selection item at operation S50.

Although several exemplary embodiments of the present invention have been shown and described, it will be appreciated by those skilled in the art that changes may be made in these exemplary embodiments without departing from the principles of the invention, the scope of which is defined by the appended claims.

## Claims

1. A digital television comprising means (41) for displaying a list of items of content, and means (13) responsive to a selection to one of the items of content to provide a list of functions available in respect of that item of content, and means (11) responsive to selection of one function from the list of functions to execute the function in respect of the content item.

2. A digital TV providing a plurality of contents, the digital television (TV) comprising:
a user input unit;
a displaying unit which displays an image; and
a controller which controls the displaying unit to display a contents execution menu corresponding to one of the contents being executed, and including a selection item to execute a function provided by the contents being executed, according to a first signal input from the user input unit, and executes the function corresponding to the selection item, according to a second signal input from the user input unit to select the selection item from the contents execution menu.

3. The digital TV according to claim 2, wherein the controller comprises:
a menu generating unit which saves contents execution menus corresponding to each of the plurality of contents and displays at least one of the contents execution menus from among the saved contents execution menus; and
a microcomputer which controls the menu generating unit according to the first signal received from the user input unit.

4. The digital TV according to claim 2, wherein the plurality of contents comprise displaying a picture based on a TV broadcasting signal received by the digital TV.

5. The digital TV according to claim 2, wherein the plurality of contents comprise performing an electronic program guide.

6. The digital TV according to claim 2, wherein the plurality of contents comprise executing a multimedia file provided by an external device connected to the digital TV.

7. The digital TV according to claim 6, wherein the external device is a home appliance or a memory card

8. The digital TV according to claim 6, wherein the external device is a network connection device.

9. The digital TV according to claim 8, wherein the network connection device connects the digital TV to the Internet.

10. The digital TV according to claim 2, wherein the user input unit is a remote control device or a keypad disposed on the digital TV, the keypad comprising at least one key.

11. A control method of a digital television (TV) providing a plurality of contents and comprising a user input unit, the method comprising:
executing one the contents;
displaying a contents execution menu corresponding to the contents being executed, according to a first signal input from the user input unit, the contents execution menu comprising a selection item to execute a function provided by the contents being executed;
inputting a second signal from the user input unit to select the selection item from the contents execution menu; and
executing the function corresponding to the selection item selected according to the second signal.
